(19) Europäisches Patentamt
European Patent Office
Office européen des brevets

(11) Veröffentlichungsnummer: **0 200 857**
**B1**

(12) # EUROPÄISCHE PATENTSCHRIFT

(45) Veröffentlichungstag der Patentschrift: **26.10.88**

(51) Int. Cl.[4]: **C 08 F 36/18,** C 08 F 2/22

(21) Anmeldenummer: **86102372.9**

(22) Anmeldetag: **24.02.86**

(54) **Verfahren zur Herstellung toluollöslicher, schwefelmodifizierter Chloroprenpolymerisate.**

(30) Priorität: **06.03.85 DE 3507825**

(43) Veröffentlichungstag der Anmeldung:
**12.11.86 Patentblatt 86/46**

(45) Bekanntmachung des Hinweises auf die Patenterteilung:
**26.10.88 Patentblatt 88/43**

(84) Benannte Vertragsstaaten:
**DE FR GB**

(56) Entgegenhaltungen:
**FR - A - 1 457 004**
**FR - A - 2 098 562**
**FR - A - 2 374 340**
**GB - A - 1 077 337**

(73) Patentinhaber: **BAYER AG, Konzernverwaltung RP Patentabteilung, D-5090 Leverkusen 1 Bayerwerk (DE)**

(72) Erfinder: **Obrecht, Werner, Dr., Holderbergerstrasse 108, D-4130 Moers 2 (DE)**
Erfinder: **Wendling, Peter, Franz-Marc-Strasse 9, D-5090 Leverkusen (DE)**
Erfinder: **Göbel, Wilhelm, Dr., Max-Beckmann-Strasse 37, D-5090 Leverkusen (DE)**
Erfinder: **Müller, Eberhard, Dr., Pfauenstrasse 19, D-4047 Dormagen (DE)**

**EP 0 200 857 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft ein Verfahren zur Herstellung toluollöslicher, schwefelmodifizierter Chloroprenpolymerisate ohne separaten Peptisationsschritt.

Schwefelmodifizierter Polychloroprenkautschuk besitzt viele wertvolle anwendungstechnische Eigenschaften und hat deshalb ein breites Anwendungsgebiet gefunden. So muss im Vergleich mit den sogenannten Mercaptan-Typen seine stärkere Mastizierbarkeit und ferner die Vulkanisierbarkeit ohne den Zusatz von Thioharnstoff-Beschleunigern besonders vorteilhaft bewertet werden. Auch Artikel, die hohen dynamischen Beanspruchungen ausgesetzt werden sollen, wie z. B. Keilriemen, werden bevorzugt aus diesem Spezialtyp hergestellt.

Die durch Radikale ausgelöste Copolymerisation von Chloropren mit Schwefel in wässrig-alkalischer Emulsion ist seit langem bekannt und beispielsweise in «Ullmanns Encyclopädie der Technischen Chemie», Band 9, S. 366 ff., Verlag Urban und Schwarzenberg, München-Berlin 1957, und in «Encyclopädie of Polymer Science and Technology», Vol. 3, S. 705 bis 730, John Wiley, New York 1965, beschrieben.

Das durch Copolymerisation gewonnene Polymere besitzt eine hochmolekulare Struktur und lässt sich infolge sehr geringer Plastizität nach herkömmlichen Verfahren kaum verarbeiten.

Durch geeignete Verbindungen, die während der Polymerisation anwesend sind oder die dem Latex nach der Polymerisation zugegeben werden, kann ein Abbau des Molekulargewichtes und damit eine gewünschte Plastizität erreicht werden. Diese Massnahmen werden beispielsweise beschrieben in US-PS 3507825, US-PS 2264173, US-PS 3378538, US-PS 3397173, in den deutschen Offenlegungsschriften 2134158, 2018736, 2213116, 2003147, 1911439, 1807298, 2241394, in den französischen Patentschriften 1457004 und 1480110, sowie in der britischen Patentschrift 959122.

Bei den zweistufigen Verfahren wird zuerst ein Latex hergestellt, dessen Polymer im zweiten Schritt durch Zugabe eines Peptisationsmittels, z. B. Tetraethylthiuramdisulfid (TETD), auf die gewünschte Viskosität eingestellt wird.

Dieses Verfahren zur Herstellung von viskositätsbeständigen und lagerstabilen schwefelmodifizierten Polychloroprentypen wird beispielsweise in der DE-OS 2218152, DE-OS 2213116, DE-OS 2003147 und der GB-PS 1219782 beschrieben.

Die DE-OS 2018736 beschreibt weiterhin ein Verfahren, in dem TETD in Kombination mit Dibutylamin dem Latex nach Beendigung der Polymerisation zugesetzt wird. Das Amin dient zur Beschleunigung der Peptisation.

Die DE-OS 2003147 beschreibt ein Verfahren, in dem die Gegenwart von wasserlöslichen tertiären Aminen die Polymerisation günstig beeinflusst. Bei diesen geschilderten Verfahren fällt ein hochpolymeres Polychloropren an, das analytisch schwierig zu charakterisieren ist und somit den nachgeschalteten Peptisationsprozess unregelmässig und schwer reproduzierbar ablaufen lässt.

Es hat nicht an Versuchen gefehlt, schwefelmodifiziertes Polychloropren mit einem günstigen Viskositätsbereich direkt an einem Einstufenverfahren herzustellen.

In diesem Verfahren werden mit Hilfe von sogenannten Reglern wie Xanthogendisulfiden, Iodoform oder $C_8$-$C_{20}$-Alkylmercaptanen die gewünschte Plastizität eingestellt. Diese Verfahren sind z. B. beschrieben in der US-PS 3378538, US-PS 3397173, FR-PS 1457004 und in der DE-OS 1911439.

Gute Ergebnisse wurden bisher erzielt, indem man nach DE-PS 2645920 den zu polymerisierenden Monomeren ein sekundäres und/oder tartiäres aliphatisches Amin mit unverzweigten und/oder cyclischen Alkylketten mit 2 bis 18 Kohlenstoffatomen in Mengen von 0,01 bis 1 Gewichtsteilen pro 100 Gewichtsteile an Monomeren sowie gegebenenfalls ein tertiäres aliphatisches wasserlösliches Amin mit Hydroxyalkylgruppen in Mengen bis 0,45 Gewichtsteilen pro 100 Gewichtsteile an Monomeren, zusetzt, Tetraethylthiuramdisulfid in Mengen von 0,05 bis 1,0 Gewichtsteilen pro 100 Gewichtsteile an Monomeren entweder dem Polymerisationsansatz nach einem Monomerumsatz von mindestens 5% und höchstens 25% zugibt, oder Tetraethylthiuramidsulfid in einer Teilmenge von 0,05 Gewichtsteilen bis 0,40 Gewichtsteilen vor Beginn der Polymerisation dem Ansatz zufügt und bestimmte Emulgatoren oder Emulgatormischungen zusetzt.

Dieses vorbekannte Verfahren verlangt eine Vielzahl von zusätzlichen Chemikalien, die noch dazu in ganz bestimmten Mengen und zu definierten Zeitpunkten während der Polymerisation eingesetzt werden müssen, obgleich sie für den fertigen Kautschuk, in dem sie verbleiben, nicht von Vorteil, möglicherweise je nach Anwendungsgebiet sogar nachteilig sind.

Aufgabe der Erfindung war daher, ein Verfahren zur Herstellung von schwefelmodifiziertem Polychloropren bereitzustellen, das ebenfalls einen nachträglichen Peptisationsschritt und die Nachteile des vorbekannten Verfahrens vermeidet.

Es wurde nun überraschend gefunden, dass diese Aufgabe dadurch gelöst werden kann, dass man die gemeinsame Polymerisation von Chloropren und Schwefel in Gegenwart von Dithiocarbamaten und/oder Xanthogenaten durchführt und den Aktivator über die Polymerisationsdauer kontinuierlich oder portionsweise zudosiert.

Die Durchführbarkeit der Polymerisation in Gegenwart von Dithiocarbamaten war insofern überraschend, als diese Verbindungen insbesondere in Kombination mit elementarem Schwefel äusserst wirksame Abstoppagentien für Emulsionspolymerisationen sind (D. C. Blackley, Emulsion Polymerisation, Theory and Practice, Applied Science Publishers Ltd., London 1975, S. 406–416), und auch bei der Emulsionspolymerisation von Chloropren ohne Schwefelzusätze als Abstoppagentien eingesetzt werden (FR-PS 1480110).

Gegenstand der Erfindung ist daher ein Verfahren zur Herstellung von gelfreiem, toluollöslichem, schwefelmodifiziertem Polychloropren durch Emulsions-Copolymerisation von Chloropren, Schwefel und gegebenenfalls weiteren, mit Chloropren und Schwefel copolymerisierbaren Monomeren mit Hilfe eines Peroxoaktivators und nachfolgende Aufarbeitung durch Abstoppen, Stabilisieren, Entgasen und Isolieren ohne separate Peptisation, dadurch gekennzeichnet, dass man die Polymerisation in Gegenwart von Dithiocarbamaten und/oder Xanthogenaten durchführt und den Aktivator über die Polymerisationsdauer kontinuierlich oder portionsweise zudosiert.

Das Polychloropren fällt als Flüssig-Kautschuk, vorzugsweise beginnend mit einer Brookfield-Viskosität von 30000 mPas bei 21°C, oder Festkautschuk, vorzugsweise bis zu einer Mooneyviskosität (ML 1+4; 100°C) von 120 ME an.

Geeignete Polychloroprenkautschuke sind solche, die bis zu 20 Gew.-% andere Monomere, beispielsweise 2,3-Dichlor-butadien, 1-Chlorbutadien, Butadien, Isopren, Acrylsäure, Methacrylsäure, Acrylnitril oder Methacrylnitril, vorzugsweise bis 10 Gew.-% 2,3-Dichlorbutadien einpolymerisiert enthalten.

Schwefel wird vorzugsweise in Mengen von 0,05 bis 1,0 Gew.-%, bezogen auf Monomere, insbesondere 0,25 bis 0,7 Gew.-% eingesetzt, bevorzugt als wässrige Dispersion.

An Stelle von Schwefel können auch übliche Schwefelspender in entsprechender Menge eingesetzt werden.

Geeignete Aktivatoren sind z. B. Persulfate, Perborate, Percarbonate, Perphosphate und $H_2O_2$, vorzugsweise wasserlösliche Salze der Peroxodischwefelsäure. Die Aktivatoren werden vorzugsweise in einer molaren Menge, die 0,03 bis 0,7 Gew.-%, insbesondere 0,1 bis 0,6 Gew.-%, bezogen auf Monomere, Kaliumperoxodisulfat entspricht, eingesetzt.

Geeignete Agentien zum Abstoppen der Polymerisation sind z. B. Brenzkatechin und vorzugsweise Diethylhydroxylamin, das insbesondere in einer Menge von 0,05 bis 0,15 Gew.-%, bezogen auf Monomere, vorzugsweise in Form einer wässrigen Lösung eingesetzt wird.

Vorzugsweise werden dem Polymer zur Verbesserung der Lagerstabilität übliche Alterungsschutzmittel wie sterisch gehinderte Phenolderivate, Amine, Phosphite, Xanthogendisulfide oder Tetraalkylthiuramdisulfide zugesetzt. Bevorzugt sind Tetraalkylthiuramdisulfide, insbesondere die Tetraethylverbindung (TETD) oder Xanthogendisulfide, insbesondere Diisoprobylxanthogendisulfid oder 2,2–(2,4–Dioxapentamethylen)–n–butyl–xanthogendisulfid, gegebenenfalls in Kombination mit Verbindungen der anderen Stoffklassen.

Die Zugabe erfolgt als wässrige Dispersion, organische Lösung oder wässrige Emulsionen einer organischen Lösung zum Latex, vor oder nach der Entfernung nicht umgesetzter Monomere. Man setzt bis zu 6 Gew.-% TETD, bezogen auf Monomere, oder eine entsprechende molare Menge einer anderen Verbindung ein.

Geeignete Dithiocarbamatanionen entsprechen der Formel

$$\begin{matrix} R^1 \\ R_2 \end{matrix} \Big> N-\underset{\underset{S}{\|}}{C}-S^{\ominus}$$

geeignete Xanthogenatanionen der Formel

$$R^3-O-\underset{\underset{S}{\|}}{C}-S^{\ominus}$$

wobei $R_1$, $R_2$ und $R_3$ einen gegebenenfalls substituierten Alkyl-, Cycloalkyl- oder Arylrest bedeuten, $R_1$ und $R_2$ darüber hinaus zusammen mit dem Stickstoffatom einen Ring bilden können und die cyclischen Substituenten Heteroatome enthalten können.

Die Dithiocarbamate und Xanthogenate werden bevorzugt in Form ihrer Alkalisalze, insbesondere Natrium- oder Kaliumsalze verwendet.

Vorzugsweise bedeuten $R_1$ und $R_2$ $C_1$–$C_4$–Alkyl, $R_3$ $C_1$–$C_8$–Alkyl oder 2,2–(2,4–Dioxapentamethylen)–n–butyl.

Vorzugsweise werden 0,05 bis 5,0 insbesondere 0,1 bis 3,0 Gew.-%, Natriumdibutyldithiocarbamat, bezogen auf Monomere, oder eine entsprechende molare Menge eines anderen Dithiocarbamates oder 0,1 bis 5,0 insbesondere 0,5 bis 3,0 Gew.-%, Kaliumethylxanthogenat, bezogen auf Monomere, oder eine entsprechende molare Menge eines anderen Xanthogenates, eingesetzt.

Ein wesentlicher Aspekt des Verfahrens ist die Herstellung gelfreier (Gelgehalt $\leqslant$ 2 Gew.-%) Chloroprenpolymerisate in einem weiten Viskositätsbereich.

Die Viskosität hängt dabei von der Schwefel- und von der Dithiocarbamt- bzw. Xanthogenatmenge ab.

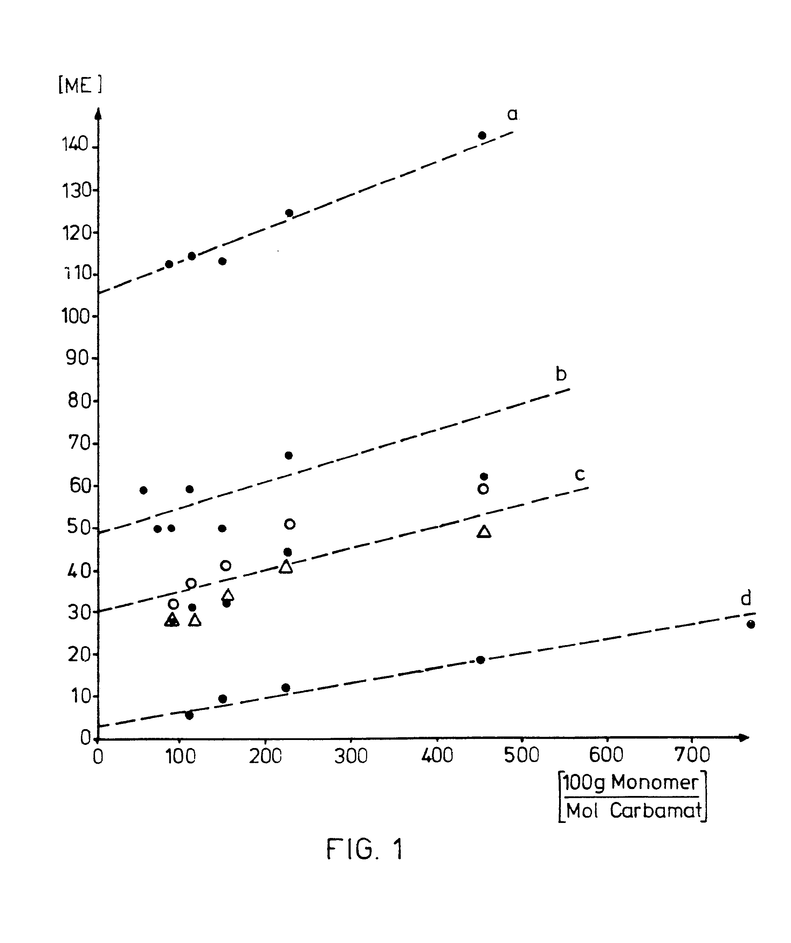

Fig. 1 zeigt die Abhängigkeit der Mooneyviskosität ML1+4 bei 100°C des Festkautschuks von den eingesetzten Dithiocarbamt- und Schwefelmengen für eine Polymerisationstemperatur von 45°C, einen Polymerisationsumsatz von 65% und einen Nachsatz von 1 Gew.-% TETD, bezogen auf Monomermenge. Es sind die reziproken Dithiocarbamatmengen in [1/Mol] für verschiedene Schwefelmengen (a ≙ 0,1 g S, b ≙ 0,2 g S, c ≙ 0,3 g S, d ≙ 0,6 g S) jeweils bezogen auf 100 g Monomermenge gegen die Mooneyviskosität (ME) aufgetragen. ● ist Dibutyl-, ○ ist Diethyl- und △ ist Dimethyldithiocarbamat.

Die Ergebnisse lassen sich gut durch Geraden darstellen. Die Achsenabschnitte dieser Geraden in ME hängen linear von der reziproken, bei der Polymerisation eingesetzten Schwefelmenge ab.

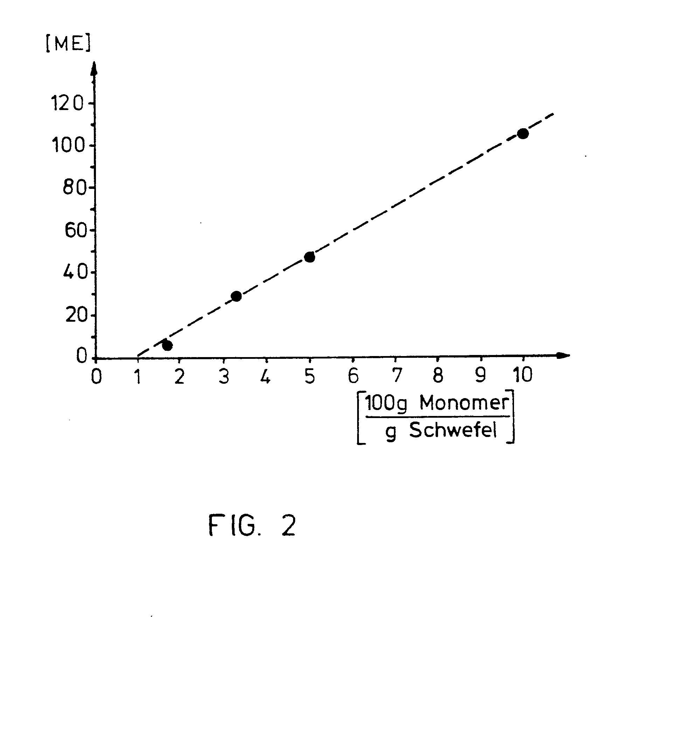

Dies ist in Fig. 2 dargestellt.

Aufgrund dieser empirisch ermittelten Abhängigkeiten kann der Fachmann auch für andere als für die in Abb. 1) und 2) geltenden Rahmenbedingungen (Schwefelmenge, Polymerisationsumsatz, Polymerisationstemperatur, Art und Menge des Dithiocarbamats bzw. Xanthogenats, Art und Menge des Thiuramdisulfid- bzw. Xanthogendisulfidnachsatzes usw.) die für die gewünschte

Mooneyviskosität notwendige Menge an Dithiocarbamat bzw. Xanthogenat ermitteln.

Beispiele

Die Versuche der Serien 1)–5) und teilweise 6) basieren auf folgender Grundrezeptur (batch-Versuche, Angaben in Gew.-Teilen):

| | |
|---|---|
| Chloropren und Comonomer: | 100 |
| Entsalztes Wasser (gesamt): | 125 ± 5 |
| Disproportionierte Abietinsäure: | 3,5 |
| Na-Salz des Kondensationsproduktes aus Naphthalinsulfonsäure und Formaldehyd: | 0,7 |
| KOH: | 0,5 |
| $K_2S_2O_8$: | 0,05–0,63 |
| Na-Salz der Anthrachinonsulfonsäure: | 0,03 |
| Schwefel: | 0,1–0,6 |
| Peptisationsmittel: | siehe Tabellen |

Die in den Serien 1)–6) beschriebenen Versuche wurden in einem 2–1–Kolben durchgeführt. In diesem Gefäss wurde die wässrige Phase bestehend aus 116 Gew.-Teilen entsalztem Wasser, disproportionierter Abietinsäure, KOH und Na-Salz des Kondensationsprodukts aus Naphthalinsulfonsäure und Formaldehyd vorgelegt, mit Stickstoff gespült und auf 45 °C aufgeheizt. Dann wurde das mit Stickstoff gespülte Monomere zugegeben. Nach Einstellung einer Temperatur von 45 °C wurde der Schwefel als 50 gew.-%ige wässrige Dispersion zugegeben. Die Schwefeldispersion enthielt, bezogen auf Dispersion, 0,9 Gew.-% Dispergiermittel, 0,08 Gew.-% ZnO und 0,1 Gew.-% MgO. Dann wurde das Peptisationsmittel als wässrige Lösung zugesetzt.

Die Aktivierung erfolgte mit 0,03 Gew.-Teilen $K_2S_2O_8$ in Form einer mit Stickstoff gespülten 2 gew.-%igen wässrigen $K_2S_2O_8$-Lösung. Während des Versuches wurden $2{,}25.10^{-3}$ Gew.-Teile $K_2S_2O_8$ pro Minute in Form dieser wässrigen und mit Stickstoff gespülten Persulfatlösung zudosiert. In den Tabellen sind jeweils die zur Erzielung der angeführten Umsätze benötigten Persulfatmengen aufgeführt. Die Gesamtmenge an Wasser ergab sich aus dem ursprünglichen Wassereinsatz und den wässrigen Lösungen bzw. Dispersionen der Chemikalien.

Falls in den Tabellen nicht anders angegeben, wurde bei einer Temperatur von 45 °C unter Stickstoff polymerisiert. In den Beispielen der Serie 2b) wurde in Gegenwart von Sauerstoff polymerisiert und mit einer Polymerisation in Abwesenheit von Sauerstoff verglichen. Der Umsatz wurde gravimetrisch oder mittels Dichtemessung verfolgt. Bei den verschiedenen Versuchen wurde bei den in Tab. 1)–5) aufgeführten Umsätzen mit 0,03 Gew.-Teilen, bezogen auf Latex, einer wässrigen 2,5 gew.-%igen Lösung von Diethylhydroxylamin abgestoppt und der Latex mit 1,0 Gew.-Teilen Tetraethylthiuramdisulfid (TETD) versetzt. TETD wurde als toluolische Emulsion eingesetzt.

Der Latex wurde auf ca. 500 ppm Restchloropren (bez. auf Latex) entgast, der entgaste Latex mit 20 gew.-%iger Essigsäure auf pH 6,5 gestellt, das Polymere durch Gefrier-koagulation isoliert, mit entsalztem Wasser gewaschen, die Felle mit einer Quetschwalze auf ca. 30 Gew.-% Restfeuchte entwässert und im Umlufttrockenschrank bei 70 °C bis zu einer Restfeuchte ≤ 0,5 Gew.-% getrocknet.

Die in den Serien 6) und 7) gegenüber den Versuchen 1)–5) geänderten Rezepturbestandteile oder Änderungen in der Versuchsdurchführung sind in den entsprechenden Tabellen zusammengefasst.

Die kontinuierlichen Polymerisationen wurden in einer 5-Kesselkaskade durchgeführt. Die Verweilzeit in jedem einzelnen der fünf gleich grossen Kessel betrug 0,5 h. Monomer, wässrige Phase und Aktivator wurden jeweils in drei separaten Strömen in den ersten Reaktor dosiert.

Die einzelnen Phasen der kontinuierlichen Polymerisation waren folgendermassen zusammengesetzt (Gew.-Teile):

*Monomerphase:*

| | |
|---|---|
| Chloropren (CP) und 2,3-Dichlorbutadien: (DCB) | siehe Tab. 6) und Tab. 7) |
| Phenothiazin: | 0,01 |

*Wässrige Phase:*

| | |
|---|---|
| Entsalztes Wasser: | 110 |
| Disproportionierte Abietinsäure: | 3,5 |
| KOH: | 0,5 |
| Natriumsalz des Kondensationsprodukts von Naphthalinsulfonsäure und Formaldehyd: | 0,7 |
| Natriumsalz der Anthrachinonsulfonsäure: | 0,06 |
| Schwefel: | siehe Tab. 6) und Tab. 7) |
| Peptisationsmittel: | Siehe Tab. 6) und Tab. 7) |

*Aktivatorlösung:*

| | |
|---|---|
| Kaliumperoxodisulfat: | 0,15 bis 0,55 dosiert als 1,2 gew.-%ige wässrige Lösung |

Die Dosierung des Aktivators erfolgte separat in die Kessel 1)–4). Über die Persulfatmenge liess sich die Verteilung des Polymerisationsumsatzes auf die einzelnen Kessel und den Endumsatz einstellen. Zur Einstellung von Endumsätzen von 65 % und 85 % werden 2 Beispiele angegeben:

| Kessel Nr. | $K_2S_2O_8$ Dosierung | Gesamtumsatz [%] | $K_2S_2O_8$ Dosierung | Gesamtumsatz [%] |
|---|---|---|---|---|
| 1 | 0,05 | 35 | 0,1 | 40 |
| 2 | 0,04 | 48 | 0,06 | 60 |
| 3 | 0,04 | 57 | 0,05 | 73 |
| 4 | 0,04 | 63 | 0,05 | 82 |
| 5 | – | 65 | – | 85 |

In den 5. Kessel der Kaskade wurde TETD als 15 gew.-%ige chloroprenische Lösung eindosiert.

In einem separaten Rührkessel wurde die Polymerisation kontinuierlich mit 0,1 Gew.-Teilen Diethylhydroxylamin abgestoppt.

Die Entgasung und Aufarbeitung des auf kontinuierliche Weise polymerisierten Latex erfolgte wie bei den batch-Versuchen beschrieben.

Die in der Tab. 7) aufgeführten batch-Versuche wurden wie die in den Tab. 1)–5) aufgeführten Versuche durchgeführt. Anstelle des 2-1-Gefässes wurde ein 250 l-Reaktor verwendet.

Am Rohkautschuk wurden folgende Bestimmungen durchgeführt:

Für die Bestimmung des Gelgehaltes wurden 100 bis 150 mg Polymer 12–16 Stunden in 20 $cm^3$ Toluol stehengelassen und danach 2 Stunden geschüttelt. Nach Abzentrifugieren des unlöslichen Anteils wurde dieser getrocknet, ausgewogen und in Prozent der Polymereinwaage angegeben.

Die Mooneyviskosität (ML 1+4) wurde nach DIN 53523 Teil 1–3 bei 100 °C bestimmt.

Die Mooneystabilität nach Heissluftalterung ($\Delta$ ML) wurde als Differenz der Mooneywerte von Walzfellen nach und vor 24- bzw. 72stündiger Lagerung bei 70 °C bestimmt. Im Falle positiven Vorzeichens erfolgt eine Zunahme der Mooneyviskosität nach der Heissluftalterung und umgekehrt.

Die Vulkanisationen wurden auf der Basis von zwei Mischungen durchgeführt:

Mischung 1 (Iso-Mischung 2475):
100,0 Gew.-Teile Polymer
0,5 Gew.-Teile Stearinsäure
2,0 Gew.-Teile Phenyl-β-naphthylamin
30,0 Gew.-Teile Russ (N 762)
4,0 Gew.-Teile Magnesiumoxid
5,0 Gew.-Teile Zinkoxid aktiv

Mischung 2:
100,0 Gew.-Teile Polymer
75,0 Gew.-Teile Russ (N 762)
10,0 Gew.-Teile Polyetherpolythioether
2,0 Gew.-Teile styrolisiertes Diphenylamin
0,5 Gew.-Teile N-Isopropyl-N'-phenyl-p-phenylen-diamin
0,5 Gew.-Teile Stearinsäure
4,0 Gew.-Teile angepastetes Magnesiumoxid
5,0 Gew.-Teile Zinkoxid.

Der Mooneyscorch (MS) wurde bei einer Temperatur von 120 °C nach DIN 53523, Teil 4 bestimmt.

Am Vulkanisat erfolgte die Bestimmung von Zugfestigkeit, Bruchdehnung und Modul bei 200 % bzw. 300 % Dehnung nach einer Vulkanisationszeit von 30 Min. nach DIN 53504.

Bei Mischung 1 wurden der Modul bei 300 % Dehnung und bei Mischung 2 bei 200 % Dehnung bestimmt.

Die Beurteilung der dynamischen Eigenschaften erfolgte nach de Mattia (DIN 53522 Teil 2) vor und nach Heissluftalterung bei 100 °C und 7 Tagen. Es wurde nach Rissbildstufe 3 ausgewertet.

Die Weiterreissfestigkeit wurde am Normring R 2 nach DIN 53504 bestimmt. Dazu wurde der Ring auf der Innenseite mit 2×5 nebeneinanderliegenden 1 mm tiefen Einschnitten, versehen. Der Abstand der Einschnitte betrug 2 mm. Die beiden Gruppen von 5 Einschnitten lagen einander gegenüber.

Die eingeschnittenen Ringe wurden auf Rollen mit den Abmessungen für den Normring R 2, man vgl. DIN 53504, Tabelle 3, gelegt und mit einer Vorschubgeschwindigkeit von 700 mm/min in einer Zugfestigkeitsmaschine auf Zug bis zum Bruch beansprucht.

Der Weiterreisswiderstand W oder die Strukturfestigkeit wird nach folgender Gleichung auf die Solldicke von $d_o = 4$ mm umgerechnet und in N angegeben:

$$W = W_{gem} \cdot \frac{d}{d_o}$$

wobei
W [N] = gesuchter Weiterreisswiderstand
$W_{gem}$ [N] = gemessener Weiterreisswiderstand
$d_o$ [mm] = Solldicke
d [mm] = gemessene Dicke

Aus den Messwerten von 3 oder 6 Proben wird der Mittelwert errechnet und der zugehörige Vertrauensbereich für eine 95 %ige Sicherheit, man vgl. DIN 53598.

Ergebnisse der Versuchsserien 1)–7)

Serie 1)

In dieser Serie wird gezeigt, dass eine erfindungsgemässe Direktpeptisation mit Dimethyl-(DMDTC)- und Diethyl-dithiocarbamat (DEDTC) möglich ist. Eine Einstellung des Mooneywertes gelingt über die Menge an Dithiocarbamat. Die Mooneywerte gelfreier Produkte (Gelgehalt < 2 %) liegen im Bereich 28–69 ME. Für die Einstellung guter Mooneystabilitäten (+5 bis –5) ist ein TETD-Nachsatz günstig.

Serie 2a)

In dieser Serie wird gezeigt, dass eine erfindungsgemässe Direktpeptisation mit Dibutyldithiocarbamat (DBDTC) möglich ist. Über die DBDTC-Menge gelingt eine Einstellung des Mooneywertes bei unterschiedlichen Schwefelmengen.

Serie 2b)

Mit diesen Versuchen wird gezeigt, dass erfindungsgemäss auch in Gegenwart von Sauerstoff eine während der Polymerisation ablaufende Direktpeptisation möglich ist. Inhibitionszeit und Bruttopolymerisationsgeschwindigkeit der Polymerisation werden kaum beeinflusst.

Serie 3)

In dieser Serie wird gezeigt, dass durch TETD-Nachsätze die Einstellung guter Mooneystabilitäten bei Produkten die erfindungsgemäss mit DBDTC durch Direktpeptisation hergestellt wurden, möglich ist.

Serie 4)

In dieser Serie wird gezeigt, dass eine erfindungsgemässe Direktpeptisation mit Dithiocarbamaten der allgemeinen Formel:

$$\left.\begin{matrix} R^1 \\ R^2 \end{matrix}\right\rangle N-\overset{\overset{S}{\|}}{C}-S]^{\ominus}$$

möglich ist.

Ausserdem ist die erfindungsgemässe Direktpeptisation mit Xanthogenaten möglich.

Serie 5)

In dieser Serie wird gezeigt, dass eine Herstellung gelfreier Produkte (Gelgehalt $< 2$) in einem weiten Umsatzbereich von 18%–90% möglich ist. Auch bei hohen Umsätzen von 90% ist eine Einstellung des Mooneywerts über die Dithiocarbamatmenge möglich.

Serie 6)

Mit den in dieser Serie zusammengefassten Versuchen wird folgendes gezeigt:

- die erfindungsgemässe Direktpeptisation ist auch in Gegenwart von Comonomeren möglich
- das Verfahren ist in einem weiten Temperaturbereich einsetzbar
- TETD-Nachsätze können in einem weiten Bereich zur Einstellung mooneystabiler Produkte variiert werden
- die Polymerisation ist sowohl kontinuierlich als auch diskontinuierlich durchführbar.

Serie 7)

Mit den in dieser Serie zusammengefassten Versuchen wird gezeigt, dass die Produkte in ihren anwendungstechnischen Eigenschaften dem Stand der Technik bezüglich Mooneystabilität, Mastikation, Mooneyscorch und in den Vulkanisatwerten (Bruchdehnung, Reissfestigkeit, Modul, Weiterreissfestigkeit und in den dynamischen Eigenschaften nach de Mattia) wenigstens gleichkommen.

Serie 1): Direktpeptisation mit Dimethyl-(DMDTC)- und Diethyl-dithiocarbamat (DEDTC)

| Schwefel | Carbamat art Na-Salze | menge | $K_2S_2O_8$ | Monomer-umsatz [%] | TETD-Nachsatz | Gel-gehalt [Gew-%] | ML 1+4 [ME] | △ ML (24 h) [ME] |
|---|---|---|---|---|---|---|---|---|
| 0,3 | DMDTC | 1,58 | 0,58 | 65 | – | 0,5 | 48 | + 7 |
| 0,3 | DMDTC | 1,26 | 0,58 | 63 | – | 1,0 | 69 | +22 |
| 0,3 | DMDTC | 0,95 | 0,63 | 67 | – | 11,0 | 116 | +17 |
| 0,3 | DMDTC | 0,63 | 0,54 | 65 | – | 37,0 | 157 | + 3 |
| 0,3 | DMDTC | 0,32 | 0,53 | 63 | – | 50,0 | 154 | >+46 |
| 0,3 | DMDTC | 1,58 | 0,65 | 64 | 1,0 | 0,1 | 28 | + 2 |
| 0,3 | DMDTC | 1,26 | 0,59 | 63 | 1,0 | 0,2 | 28 | ± 0 |
| 0,3 | DMDTC | 0,95 | 0,53 | 63 | 1,0 | 0,1 | 34 | – 2 |
| 0,3 | DMDTC | 0,63 | 0,55 | 65 | 1,0 | 0,3 | 41 | ± 0 |
| 0,3 | DMDTC | 0,32 | 0,49 | 61 | 1,0 | 1,1 | 49 | – 1 |
| 0,3 | DEDTC | 1,88 | 0,49 | 63 | – | 0,9 | 43 | + 2 |
| 0,3 | DEDTC | 1,51 | 0,44 | 63 | – | 0,8 | 55 | + 4 |
| 0,3 | DEDTC | 1,13 | 0,28 | 59 | – | 8,0 | 133 | + 3 |
| 0,3 | DEDTC | 0,75 | 0,31 | 64 | – | 24,0 | 152 | – 3 |
| 0,3 | DEDTC | 0,38 | 0,35 | 65 | – | 30,0 | 151 | + 6 |
| 0,3 | DEDTC | 1,88 | 0,51 | 66 | 1,0 | 0,1 | 32 | – 2 |
| 0,3 | DEDTC | 1,51 | 0,51 | 69 | 1,0 | 0,1 | 37 | – 4 |
| 0,3 | DEDTC | 1,13 | 0,29 | 62 | 1,0 | 0,2 | 41 | – 3 |
| 0,3 | DEDTC | 0,75 | 0,32 | 65 | 1,0 | 0,3 | 51 | – 1 |
| 0,3 | DEDTC | 0,38 | 0,30 | 66 | 1,0 | 0,4 | 59 | + 2 |

Serie 2a): Direktpeptisation mit Dibutyldithiocarbamat

| Schwefel | DBDTC | $K_2S_2O_8$ | Monomer-umsatz [%] | TETD-Nachsatz | Gel-gehalt [Gew-%] | ML 1+4 [ME] | △ ML (24 h) [ME] |
|---|---|---|---|---|---|---|---|
| 0,1 | 2,5 | 0,15 | 69 | 1,0 | 6,0 | 113 | –13 |
| 0,1 | 2,0 | 0,15 | 69 | 1,0 | 6,0 | 114 | –11 |
| 0,1 | 1,5 | 0,12 | 66 | 1,0 | 5,0 | 113 | –13 |
| 0,1 | 1,0 | 0,11 | 66 | 1,0 | 9,0 | 124 | –11 |
| 0,1 | 0,5 | 0,12 | 69 | 1,0 | 31,0 | 143 | –10 |

| Schwefel | DBDTC | $K_2S_2O_8$ | Monomer-umsatz [%] | TETD-Nachsatz | Gel-gehalt [Gew-%] | ML 1+4 [ME] | △ ML (24 h) [ME] |
|---|---|---|---|---|---|---|---|
| 0,2 | 4,0 | 0,24 | 69 | 1,0 | 0,5 | 59 | + 1 |
| 0,2 | 3,0 | 0,20 | 64 | 1,0 | 0,7 | 50 | + 3 |
| 0,2 | 2,5 | 0,20 | 63 | 1,0 | 0,5 | 50 | + 6 |
| 0,2 | 2,0 | 0,22 | 65 | 1,0 | 0,8 | 59 | + 3 |
| 0,2 | 1,5 | 0,19 | 67 | 1,0 | 0,6 | 50 | + 4 |
| 0,2 | 1,0 | 0,17 | 66 | 1,0 | 1,0 | 67 | + 4 |
| 0,3 | 2,5 | 0,24 | 63 | 1,0 | 0,1 | 28 | + 4 |
| 0,3 | 2,0 | 0,23 | 64 | 1,0 | 0,1 | 31 | + 3 |
| 0,3 | 1,5 | 0,20 | 69 | 1,0 | 0,2 | 32 | + 2 |
| 0,3 | 1,0 | 0,18 | 65 | 1,0 | 0,4 | 44 | + 5 |
| 0,3 | 0,5 | 0,16 | 66 | 1,0 | 0,9 | 62 | − 4 |
| 0,6 | 2,0 | 0,39 | 63 | 1,0 | 0,1 | 6 | + 1 |
| 0,6 | 1,5 | 0,39 | 66 | 1,0 | 0,1 | 9 | + 4 |
| 0,6 | 1,0 | 0,28 | 69 | 1,0 | 0,2 | 12 | + 3 |
| 0,6 | 0,5 | 0,23 | 68 | 1,0 | 0,1 | 19 | + 1 |
| 0,6 | 0,4 | 0,21 | 66 | 1,0 | 0,3 | 19 | + 1 |
| 0,6 | 0,3 | 0,21 | 70 | 1,0 | 0,2 | 27 | + 2 |
| 0,6 | 0,2 | 0,14 | 63 | 1,0 | 0,5 | 35 | ± 0 |
| 0,6 | 0,1 | 0,15 | 64 | 1,0 | 0,5 | 26 | − 4 |

Serie 2b): Direktpeptisation u. Polymerisation mit Dibutyldithiocarbamat (DBDTC) in Gegenwart von Sauerstoff

| Schwefel | DBDTC | $K_2S_2O_8$ | Sauerstoff mg/l | Monomer-umsatz [%] | Inhibitions-zeit [Min.] | Brutto-polymerisations-geschwindigkeit [$mol.cm^3_{wp}\ sec^{-1}$] | ML 1+4 [ME] |
|---|---|---|---|---|---|---|---|
| 0,3 | 1,0 | 0,23 | – | 79 | < 1 | 1,1 | 53 |
| 0,3 | 1,0 | 0,35 | Sättigung der wässrigen Phase mit Luft bei Raumtemperatur | 76 | < 1 | 0,9 | 41 |

Serie 3): TETD-Stabilisierung bei Einsatz von DBDTC als Direktpeptisationsmittel

| Schwefel | DBDTC | $K_2S_2O_8$ | Monomer-umsatz [%] | TETD-Nachsatz | Gel-gehalt [Gew-%] | ML 1+4 [ME] | △ ML (24 h) [ME] |
|---|---|---|---|---|---|---|---|
| 0,3 | 2,5 | 0,27 | 60 | – | 0,9 | 74 | + 18 |
| 0,3 | 2,0 | 0,37 | 62 | – | 1,8 | 87 | + 17 |
| 0,3 | 1,5 | 0,22 | 68 | – | 1,5 | 59 | + 19 |
| 0,3 | 1,0 | 0,21 | 63 | – | 2,3 | 70 | + 20 |
| 0,3 | 2,5 | 0,27 | 64 | 1,0 | 0,3 | 22 | + 2 |
| 0,3 | 2,5 | 0,24 | 63 | 1,0 | 0,4 | 28 | + 4 |
| 0,3 | 2,0 | 0,26 | 67 | 1,0 | 0,3 | 25 | + 2 |
| 0,3 | 2,0 | 0,23 | 64 | 1,0 | 0,6 | 31 | + 3 |
| 0,3 | 1,5 | 0,22 | 69 | 1,0 | 0,3 | 33 | + 4 |
| 0,3 | 1,5 | 0,20 | 69 | 1,0 | 0,5 | 32 | + 2 |
| 0,3 | 1,0 | 0,18 | 68 | 1,0 | 0,5 | 36 | + 4 |
| 0,3 | 1,0 | 0,18 | 65 | 1,0 | 0,5 | 44 | + 5 |
| 0,3 | 0,5 | 0,17 | 68 | 1,0 | 0,6 | 52 | − 2 |
| 0,3 | 0,5 | 0,16 | 66 | 1,0 | 1,0 | 62 | − 4 |

Serie 4): Direktpeptisation mit verschiedenen Dithiocarbamaten, Xanthogenaten und Na-Salz von Mercaptobenzthiazol

| Schwefel | Peptisationsmittel Art | Menge | $K_2S_2O_8$ | Monomerumsatz [%] | TETD-Nachsatz | Gelgehalt [Gew-%] | ML 1+4 [ME] | △ ML (24 h) [ME] |
|---|---|---|---|---|---|---|---|---|
| 0,3 | Na-Bis-2-Ethyl-hexyl)-dithiocarbamat | 1,27 | 0,48 | 65 | 1,0 | 0,5 | 41 | + 8 |
| 0,3 | Na-Dicyclohexyldithiocarbamat | 1,04 | 0,53 | 65 | 1,0 | 0,8 | 59 | − 1 |
| 0,3 | K-Ethylxanthogenat | 2,0 | 0,09 | 64 | 1,0 | 0,3 | 37 | + 5 |
| 0,3 | | 1,0 | 0,08 | 66 | 1,0 | 0,5 | 60 | + 14 |
| 0,3 | | 0,5 | 0,07 | 64 | 1,0 | 0,9 | 64 | + 18 |
| 0,3 | | 1,5 | 0,08 | 67 | 1,0 | 1,2 | 61 | + 8 |
| 0,3 | | 1,5 | 0,08 | 65 | 3,0 | 0,8 | 37 | + 2 |
| 0,3 | Na-2,2-(2,4-Dioxopentamethylen)-n-butylxanthogenat * | 2,5 | 0,55 | 63 | 1,0 | 1,5 | 72 | + 10 |
| | | 1,0 | 0,19 | 68 | 1,0 | 0,8 | 59 | + 11 |
| | | 0,5 | 0,13 | 67 | 1,0 | 0,6 | 56 | + 8 |

*

O–CH₂
CH₂
C
O–CH₂
CH₂–O–C–S⊖Na⊕
S
C₂H₅

Serie 5): Umsatzvariation bei Direktpeptisation mit Dibutyldithiocarbamat

| Schwefel | DBDTC | $K_2S_2O_8$ | Monomerumsatz [%] | TETD-Nachsatz | Gelgehalt [Gew-%] | ML 1+4 [ME] | △ ML (24 h) [ME] |
|---|---|---|---|---|---|---|---|
| 0,3 | 1,0 | 0,05 | 18 | 1,0 | 0,8 | 8 | – |
| 0,3 | 1,0 | 0,07 | 32 | 1,0 | 0,5 | 34 | – |
| 0,3 | 1,0 | 0,08 | 41 | 1,0 | 1,7 | 38 | – |
| 0,3 | 1,0 | 0,12 | 51 | 1,0 | 1,7 | 41 | – |
| 0,3 | 1,0 | 0,15 | 60 | 1,0 | 2,2 | 55 | – |
| 0,3 | 1,0 | 0,21 | 69 | 1,0 | 1,5 | 58 | – |
| 0,5 | 0,2 | 0,05 | 19 | 1,0 | 0,1 | 19 | – |
| 0,5 | 0,2 | 0,09 | 47 | 1,0 | 0,2 | 27 | – |
| 0,5 | 0,2 | 0,12 | 57 | 1,0 | 0,2 | 40 | – |
| 0,5 | 0,2 | 0,14 | 63 | 1,0 | 0,2 | 41 | – |
| 0,5 | 0,2 | 0,17 | 70 | 1,0 | 0,7 | 73 | – |
| 0,5 | 0,2 | 0,21 | 80 | 1,0 | 1,0 | 65 | – |
| 0,3 | 0,5 | 0,26 | 80 | 1,0 | 0,2 | 62 | + 4 |
| 0,3 | 1,0 | 0,28 | 80 | 1,0 | 0,2 | 44 | + 3 |
| 0,3 | 1,5 | 0,33 | 80 | 1,0 | 0,2 | 35 | + 4 |
| 0,3 | 2,0 | 0,33 | 80 | 1,0 | 0,1 | 35 | + 1 |
| 0,3 | 1,0 | 0,43 | 90 | 1,0 | 3,2 | 62 | + 1 |
| 0,3 | 1,5 | 0,38 | 90 | 1,0 | 2,1 | 55 | + 3 |
| 0,3 | 2,0 | 0,39 | 90 | 1,0 | 0,7 | 47 | + 7 |

Serie 6): Direktpeptisation mit unterschiedlichen Dithiocarbamaten bei diskontinuierlicher und kontinuierlicher Fahrweise

| diskonti | konti | Peptisationsmittel Menge-Art | | Monomer CP | DCB | Schwefel | Temp. [°C] | $K_2S_2O_8$ | Monomerumsatz | TETD-Nachsatz | ML 1+4 [ME] | △ ML (24 h) [ME] | (72 h) [ME] |
|---|---|---|---|---|---|---|---|---|---|---|---|---|---|
| X | – | 3,0 | DBDTC | 100 | – | 0,2 | 45 | 0,20 | 64 | 1,0 | 50 | + 3 | – |
| X | – | 0,2 | DBDTC | 100 | – | 0,6 | 45 | 0,14 | 63 | 1,0 | 35 | ± 0 | – |
| X | – | 1,9 | DEDTC | 100 | – | 0,3 | 45 | 0,49 | 63 | – | 43 | + 2 | – |
| X | – | 1,1 | DEDTC | 100 | – | 0,3 | 45 | 0,29 | 62 | 1,0 | 41 | – 3 | – |
| X | – | 0,3 | DMDTC | 100 | – | 0,3 | 45 | 0,49 | 61 | 1,0 | 49 | – 1 | – |
| – | X | 0,46 | DBDTC | 98,8 | 1,2 | 0,5 | 30 | 0,16 | 68 | 1,0 | 59 | – 5 | – 6 |
| – | X | 0,45 | DBDTC | 97,0 | 3,0 | 0,5 | 30 | 0,16 | 65 | 1,0 | 37 | – 3 | – 2 |
| – | X | 0,81 | DBDTC | 98,8 | 1,2 | 0,5 | 45 | 0,54 | 85 | 1,5 | 41 | – 2 | – 3 |
| – | X | 0,56 | DBDTC | 98,8 | 1,2 | 0,5 | 10 | 0,55 | 50 | 1,0 | 35 | – 3 | – 6 |
| – | X | 2,5 | DBDTC | 100 | – | 0,3 | 45 | 0,45 | 90 | 2,0 | 47 | – 1 | – 4 |

Serie 7): Herstellungsbedingungen der Proben a)–f)

| Versuch | diskonti (250 l) | konti | Peptisationsmittel | | Monomer CP | DCB | Schwefel | Temp. [°C] | $K_2S_2O_8$ | Monomer umsatz [%] | TETD-Nachsatz |
|---|---|---|---|---|---|---|---|---|---|---|---|
| a) | | X | 1,2 | DBDTC | 98,8 | 1,2 | 0,3 | 40 | 0,13 | 63 | 3,0 |
| b) | | X | 0,35 | DBDTC | 98,8 | 1,2 | 0,5 | 45 | 0,13 | 67 | 1,0 |
| c) | | X | 1,8 | DBDTC | 98,8 | 1,2 | 0,3 | 45 | 0,32 | 85 | 3,0 |
| d) | X | | 1,0 | DBDTC | 98,8 | 1,2 | 0,3 | 40 | 0,13 | 65 | 1,5 |
| e) | X | | 1,5 | DBDTC | 98,8 | 1,2 | 0,3 | 45 | 0,20 | 65 | 3,0 |
| f) | | X | 3,0 | DBDTC | 98,8 | 1,2 | 0,3 | 45 | 0,54 | 90 | 3,0 |

Serie 8): Anwendungstechnische Eigenschaften der Proben a)–f)

| Versuch | ML 1+4 [ME] | △ ML (24 h) [ME] | (72 h) [ME] | Mischungs-Nr. | Mischungsmooney [ME] | MS-5 [Min] | Zugfestigkeit [mPa] | Bruchdehnung [%] | M [mPa] bei 300% Dehnung (bei 200% Dehnung) | Weiterreissfestigkeit [N] | dyn. Werte o-Wert [KZ] | (De-Mattia) nach HLA [KZ] |
|---|---|---|---|---|---|---|---|---|---|---|---|---|
| a | 61 | – 5 | – | 1 | 74 | 21 | 20,0 | 755 | 7,0 | 235 | – | > 500 |
| b | 35 | – 3 | – | 1 | 54 | 27 | 20,5 | 605 | 8,9 | 204 | – | > 500 |
| c | 37 | – 4 | – 7 | 2 | 42 | – | 15,0 | 390 | (8,2) | 212 | 425 | > 500 |
| d | 48 | + 8 | – | 1 | 69 | 25 | 22,2 | 675 | 8,2 | 235 | – | > 500 |
| e | 41 | – 2 | – 3 | 1 | 57 | – | 19,0 | 620 | 8,0 | – | – | > 500 |
| f | 51 | – 4 | – 8 | 2 | 52 | 18 | 15,1 | 420 | (8,1) | 210 | 500 | > 500 |

**Patentansprüche**

1. Verfahren zur Herstellung von gelfreiem, toluollöslichem, schwefelmodifiziertem Polychloropren durch Emulsions-Copolymerisation von Chloropren, Schwefel und gegebenenfalls weiteren, mit Chloropren und Schwefel copolymerisierbaren Monomeren mit Hilfe eines Peroxyaktivators und nachfolgende Aufarbeitung durch Stabilisieren, Abstoppen, Entgasen und Isolieren ohne separate Peptisation, dadurch gekennzeichnet, dass man die Polymerisation in Gegenwart von Dithiocarbamaten und/oder Xanthogenaten durchführt und den Aktivator über die Polymerisationsdauer kontinuierlich oder portionsweise zudosiert.

2. Verfahren nach Anspruch 1, dadurch gekennzeichnet, dass das toluollösliche, schwefelmodifizierte Polychloropren ein Flüssig- oder Festkautschuk ist, vorzugsweise beginnend mit einer Brookfieldviskosität von 30000 mPas bei 21 °C bis zu einer Mooneyviskosität (ML 1+4, 100 °C) von 120 ME.

3. Verfahren nach Anspruch 1, dadurch gekennzeichnet, dass das Polychloropren bis zu 10 Gew.-% 2,3-Dichlorbutadien einpolymerisiert enthält.

4. Verfahren nach Anspruch 1, dadurch gekennzeichnet, dass Schwefel in einer Menge von 0,05 bis 1,0 Gew.-%, insbesondere 0,25 bis 0,7 Gew.-%, bezogen auf Monomere eingesetzt wird.

5. Verfahren nach Anspruch 1, dadurch gekennzeichnet, dass als Aktivatoren wasserlösliche Salze der Peroxodischwefelsäure in einer molaren Menge, die 0,03 bis 0,7 Gew.-%, insbesondere 0,1 bis 0,6 Gew.-%, bezogen auf Monomere, Kaliumperoxodisulfat entspricht, eingesetzt werden.

6. Verfahren nach Anspruch 1, dadurch gekennzeichnet, dass man als Dithiocarbamate solche, deren Anion der Formel

$$\begin{matrix} R^1 \\ \phantom{x} \\ R_2 \end{matrix} \!\!> N-\underset{\underset{\displaystyle S}{\|}}{C}-S^{\ominus}$$

entspricht, bzw. als Xanthogenate solche, deren Anion der Formel

$$R^3-O-\underset{\underset{\displaystyle S}{\|}}{C}-S^{\ominus}$$

entspricht, einsetzt, wobei

$R_1$, $R_2$ und $R_3$ einen gegebenenfalls substituierten Alkyl-, Cycloalkyl- oder Arylrest bedeuten, $R_1$ und $R_2$ darüberhinaus zusammen mit dem Stickstoffatom einen Ring bilden können und die cyclischen Substituenten Heteroatome enthalten können.

7. Verfahren nach Anspruch 6, wobei $R_1$ und $R_2$ $C_1$–$C_4$–Alkyl, $R_3$ $C_1$–$C_8$-Alkyl oder 2,2–(2,4-Dioxapentamethylen)–n–butyl bedeuten.

8. Verfahren nach Anspruch 1, dadurch gekennzeichnet, dass 0,05 bis 5,0, insbesondere 0,1 bis 3,0 Gew.-%, Natriumdibutyldithiocarbamat, bezogen auf Monomere, oder eine entsprechende molare Menge eines anderen Dithiocarbamates oder 0,1 bis 5,0, insbesondere 0,5 bis 3,0 Gew.-%, Kaliumethylxanthogenat, bezogen auf Monomere, oder eine entsprechende molare Menge eines anderen Xanthogenates eingesetzt werden.

## Claims

1. A process for the production of gel-free, toluene-soluble, sulfur-modified polychloroprene by emulsion copolymerization of chloroprene, sulfur and, optionally, other monomers copolymerizable with chloroprene and sulfur using a peroxy activator and subsequent working up by stabilization, termination, degassing and isolation without separate peptization, characterized in that the polymerization is carried out in the presence of dithiocarbamates and/or xanthogenates and the activator is introduced continuously or in portions over the polymerization time.

2. A process as claimed in claim 1, characterized in that the toluene-soluble, sulfur-modified polychloroprene is a liquid or solid rubber, preferably beginning with a Brookfield viscosity of 30000 at 21 °C to a Mooney viscosity (ML 1+4, 100 °C) of 120 MU.

3. A process as claimed in claim 1, characterized in that the polychloroprene contains up to 10% by weight copolymerized 2.3-dichlorobutadiene.

4. A process as claimed in claim 1, characterized in that the sulfur is used in a quantity of 0.05 to 1,0% by weight and more especially in a quantity of 0.25 to 0.7% by weight, based on monomers.

5. A process as claimed in claim 1, characterized in that water-soluble salts of peroxodisulfuric acid are used as activators in a molar quantity corresponding to 0.03 to 0.7% by weight and more especially to 0.1 to 0.6% by weight, based on monomers, of potassium peroxodisulfate.

6. A process as claimed in claim 1, characterized in that the dithiocarbamates used are those of which the anion has the following formula

$$\begin{matrix} R^1 \\ \phantom{x} \\ R_2 \end{matrix} \!\!> N-\underset{\underset{\displaystyle S}{\|}}{C}-S^{\ominus}$$

while the xanthogenates used are those of which the anion has the following formula

$$R^3-O-\underset{\underset{\displaystyle S}{\|}}{C}-S^{\ominus}$$

in these formulae,

$R_1$, $R_2$ and $R_3$ represent an optionally substituted alkyl, cycloalkyl or aryl radical, in addition to which $R_1$ and $R_2$ may form a ring together with the nitrogen atom and the cyclic substituents may contain hetero atoms.

7. A process as claimed in claim 6, wherein $R_1$ and $R_2$ represent $C_1$–$C_4$ alkyl, $R_3$ represents $C_1$–$C_8$ alkyl or 2.2–(2.4–dioxapentamenthylene)–n–butyl.

8. A process as claimed in claim 1, characterized in that 0.05 to 5.0% by weight and more especially 0.1 to 3.0% by weight sodium dibutyl dithiocarbamate, based on monomers, or a corresponding molar quantity of another dithiocarbamate or 0.1 to 5,0% by weight and more especially 0.5 to 3.0% by weight potassium methyl xanthogenate, based on monomers, or a corresponding molar quantity of another xanthogenate is used.

## Revendications

1. Procédé de préparation d'un polychloroprène modifié par le soufre, exempt de gel, soluble dans le toluène, par copolymérisation en émulsion du chloroprène, du soufre et le cas échéant d'autres monomères copolymérisables avec le chloroprène et le soufre, à l'aide d'un activateur peroxydique avec traitement subséquent par stabilisation, arrêt de la polymérisation, dégazage et isolement sans peptisation séparée, caractérisé en ce que l'on effectue la polymérisation en présence de dithiocarbamates et/ou de xanthogénates et on ajoute l'activateur en continu ou par portions pendant toute la durée de polymérisation.

2. Procédé selon la revendication 1, caractérisé en ce que le polychloroprène modifié par le soufre, soluble dans le toluène, est un caoutchouc liquide ou solide, de préférence au début à une viscosité Brookfield de 30000 mPas à 21 °C et allant jusqu'à une viscosité Mooney (ML 1+4, 100 °C) de 120 UM.

3. Procédé selon la revendication 1, caractérisé en ce que le polychloroprène contient jusqu'à 10% en poids de 2,3-dichlorobutadiène à l'état polymérisé.

4. Procédé selon la revendication 1, caractérisé en ce que le soufre est mis en œuvre en quantité de 0,05 à 1,0% en poids, plus spécialement de 0,25 à 0,7% en poids par rapport aux monomères.

5. Procédé selon la revendication 1, caractérisé en ce que l'on utilise en tant qu'activateurs des sels solubles dans l'eau de l'acide peroxydisulfurique en quantité molaire correspondant à 0,03 à 0,7% en poids, plus spécialement 0,1 à 0,6% en poids de peroxodisulfate de potassium par rapport aux monomères.

6. Procédé selon la revendication 1, caractérisé en ce que l'on utilise en tant que dithiocarbamates des dithiocarbamates dont l'anion répond à la formule

$$\begin{matrix} R^1 \searrow \\ R_2 \nearrow \end{matrix} N-\underset{\underset{S}{\|}}{C}-S^{\ominus}$$

et en tant que xanthogénates des xanthogénates dont l'anion répond à la formule

$$R^3-O-\underset{\underset{S}{\|}}{C}-S^{\ominus}$$

dans lesquelles
$R_1$, $R_2$ et $R_3$ représentent chacun un groupe alkyle, cycloalkyle ou aryle éventuellement substitué, $R_1$ et $R_2$ pouvant en outre former avec l'atome d'azote un cycle et les substituants cycliques pouvant contenir des hétéroatomes.

7. Procédé selon la revendication 6, dans lequel $R_1$ et $R_2$ représentent des groupes alkyle en $C_1$–$C_4$, $R_3$ représente un groupe alkyle en $C_1$–$C_8$ ou 2,2–(2,4–dioxapentaméthylène)–n–butyle.

8. Procédé selon la revendication 1, caractérisé en ce que l'on utilise de 0,05 à 5,0, plus spécialement de 0,1 à 3,0% en poids de dibutyldithiocarbamate de sodium par rapport aux monomères ou la quantité molaire correspondante d'un autre dithiocarbamate ou de 0,1 à 5,0, plus spécialement de 0,5 à 3,0% en poids de méthylxanthogénate de potassium, par rapport aux monomères, ou la quantité molaire correspondante d'un autre xanthogénate.

[ME]
140
130
120
110
100
90
80
70
60
50
40
30
20
10
0
a
b
c
d
0
100
200
300
400
500
600
700
100g Monomer
Mol Carbamat

FIG. 1

[ME]
120
100
80
60
40
20
0
0
1
2
3
4
5
6
7
8
9
10
100g Monomer
g Schwefel

FIG. 2